# FASCICULE DE BREVET EUROPEEN

(11) **EP 2 094 554 B1**
(45) Date de publication et mention de la délivrance du brevet: **07.09.2011**
(21) Numéro de dépôt: 07858518.9
(22) Date de dépôt: 05.10.2007
(51) Int. Cl.: B62D 5/04, B62D 5/065

(54) **PROCÉDÉ POUR PILOTER UN GROUPE ÉLECTROPOMPE D'UN SYSTÈME D'ASSISTANCE DE DIRECTION ÉLECTRO-HYDRAULIQUE POUR UN VÉHICULE AUTOMOBILE**
VERFAHREN ZUM ANTREIBEN EINER ELEKTRISCH BETRIEBENEN PUMPENEINHEIT EINES DURCH ELEKTROHYDRAULISCHE KRAFT GESTÜTZTEN LENKSYSTEMS FÜR EIN MOTORFAHRZEUG
METHOD FOR DRIVING AN ELECTRICALLY OPERATED PUMP UNIT OF A MOTOR VEHICLE ELECTROHYDRAULIC POWER-ASSISTED STEERING SYSTEM

(30) Priorité: 23.10.2006 FR 0654446
(43) Date de publication de la demande: 02.09.2009
(73) Titulaire: Renault S.A.S., 92100 Boulogne-Billancourt (FR)
(72) Inventeur: CHAUVELIER, Eric, 78320 Le Mesnil Saint Denis (FR)
(86) Numéro de dépôt international: PCT/FR2007/052087
(87) Numéro de publication internationale: WO 2008/050021

(56) Documents cités:
- EP-A- 1 321 347
- EP-A- 1 544 078
- JP-A- 2003 072 575
- JP-A- 2005 271 860
- JP-A- 2006 069 352

## Description

### DOMAINE TECHNIQUE

La présente invention concerne un procédé de pilotage d'un groupe électropompe destiné à un système d'assistance de direction électro-hydraulique pour un véhicule automobile.

Pour faciliter l'ensemble des manoeuvres effectués par un utilisateur, les véhicules automobiles sont de plus en plus souvent équipés d'une direction assistée. Le volant de direction et la colonne ou la crémaillère de direction sont mécaniquement connectés à un système d'assistance de direction électro-hydraulique à vérin hydraulique intégré (connu sous l'abréviation EHPS, c'est-à-dire « Electro-Hydraulic Power Steering »), servant à réaliser l'orientation des roues directrices du véhicule. L'EHPS intègre un Groupe Electropompe (connu sous l'abréviation GEP).

Le GEP est une unité constituée de quatre composants interagissant entre eux, à savoir un moteur électrique, un calculateur, une pompe d'assistance et un réservoir d'huile. La pompe d'assistance est entraînée en rotation par le moteur électrique sous la commande du calculateur en fonction de signaux électriques.

Ces signaux correspondent spécifiquement à une vitesse du véhicule, à une vitesse de variation de l'angle pris par le volant de direction, à l'angle du volant, à un APrès Contact (connu sous l'abréviation APC) ou IGN (pour « IGNition »), et à un état du moteur thermique.

Le calculateur est composé d'une connectique avec deux voies d'alimentation. Une première empreinte ou un premier connecteur transmet la puissance, soit le pôle positif de la batterie et la masse. Une deuxième empreinte ou un deuxième connecteur, appelé ci-après connecteur signal, transmet les signaux. Le connecteur signal permet de connaître l'état véhicule (APC, vitesse véhicule, état moteur thermique, action sur le volant). Si cela est souhaité, le GEP peut être démarré ou arrêté par le biais de ce connecteur signal.

Si le connecteur signal sort du logement dans lequel il est inséré, entraînant un débranchement lorsque le véhicule roule, le GEP dispose de l'alimentation par le connecteur puissance pour fonctionner, mais les paramètres liés à l'état véhicule restent inconnus. En cas de pertes du connecteur signal, le GEP ne connaît plus les paramètres de la vitesse véhicule, de l'angle volant, de la vitesse volant, de l'APC et de l'état moteur thermique. Le calculateur n'est plus en mesure de commander correctement le moteur de la pompe.

### ÉTAT DE LA TECHNIQUE ANTÉRIEURE

Dans de nombreux cas, une perte de connecteur signal conduit à une perte de l'assistance de direction, et va être associé à un allumage d'un voyant au niveau du tableau de bord, de façon à avertir l'utilisateur.

Au moment de la déconnection du connecteur signal, le calculateur détecte une absence totale d'information état véhicule. Le calculateur peut prendre une décision arbitraire d'arrêter purement et simplement le GEP, alors que le véhicule est toujours en train de rouler.

Cependant, cette première approche n'offre pas une bonne sécurité pour l'utilisateur. En provoquant un arrêt de la direction assistée, ce dernier peut alors perdre le contrôle de son véhicule.

Une autre approche envisagée est que le calculateur peut être prévu pour ne pas arrêter le GEP. Le calculateur ne peut plus recevoir d'informations quant à l'état véhicule, et plus particulièrement quant à sa vitesse, via le connecteur signal, même lorsque le véhicule a arrêté de rouler. Dans une telle situation, le GEP va rester ainsi en permanence en marche, entraînant une décharge complète de la batterie, le véhicule ne pouvant alors plus redémarrer par la suite.

Une autre approche encore consiste à arrêter le GEP progressivement, pendant un certain temps, indépendamment de l'utilisation du véhicule. L'arrêt du GEP est donc retardé. Ces solutions antérieures ne permettent pas d'identifier l'utilisation de la direction.

De tels systèmes sont par exemple décrits dans les demandes JP 2006-069352 et JP 2003-072575, où la décroissance de l'intensité de l'assistance a lieu dès qu'une défaillance apparaît.

Le document EP 1 321 347 décrit un dispositif d'assistance de direction à l'aide d'un moteur électrique, où, en cas de défaillance mineure d'un des capteurs fournissant l'un des paramètres de commande de l'assistance, le dispositif réduit le courant maximal du moteur d'assistance, permettant de réduire l'assistance sans toutefois l'annuler.

Le document FR- 2.864.000 décrit un système d'assistance de direction électro-hydraulique pour un véhicule automobile. Une pompe hydraulique d'assistance est entraînée par un moteur électrique commandé par calculateur. Le calculateur tient compte d'un signal représentatif de la vitesse du véhicule et d'un signal représentatif de la vitesse de variation de l'angle du volant de direction. Un signal représentatif de la vitesse de variation de l'angle du volant de direction est calculé à partir du courant consommé par le moteur de la pompe. L'information angle volant est reconstituée, ce qui permet de se dispenser d'un capteur angle volant.

Cependant, le courant moteur consommé sert à reconstituer l'angle volant, mais cette information n'est pas utilisée pour identifier le roulage du véhicule. Il n'y a plus d'information sur la vitesse véhicule, si le connecteur signal est déconnecté. Aucune étape de procédé concernant spécifiquement le calculateur n'est prévu pour détecter l'utilisation de la direction grâce au signal courant consommé. Rien n'est prévu pour assurer un fonctionnement du GEP en cas de perte connecteur signal.

### EXPOSÉ DE L'INVENTION

Un problème principal que se propose de résoudre l'invention consiste à mettre en oeuvre un procédé de pilotage d'un groupe électropompe pour une direction assistée d'un véhicule automobile. Un deuxième problème est d'éviter que l'utilisateur perde un usage sa direction assistée, en cas de problème lié au GEP. Un troisième problème est d'optimiser le fonctionnement du GEP, en cas de déconnection du connecteur de signal. Un quatrième problème est de prévoir une stratégie en cas de perte de signal, vitesse véhicule et signal APC. Un autre problème encore est la nécessité d'identifier une phase de roulage sans recevoir les informations de l'état véhicule, suite à une déconnexion du connecteur signal.

L'invention concerne donc un procédé selon la revendication 1.

Conformément à un aspect de la présente invention, le procédé est caractérisé en ce qu'il consiste à commander le moteur pendant une ou plusieurs périodes successives, en fonction de valeurs prédéterminées respectives pour les paramètres et en fonction d'une valeur du courant consommé par le moteur, mesuré au niveau du calculateur, en cas de déconnection du connecteur de signal.

Autrement dit, un arrêt complet et brutal du GEP est évité, en surveillant un signal courant consommé par le moteur électrique. Le fonctionnement du GEP est régulé en plusieurs périodes, grâce au traitement du signal courant consommé.

Le GEP possède des capteurs internes nécessaires pour son fonctionnement, à savoir une mesure de courant, une mesure de la tension, des capteurs de températures. Le GEP peut détecter la perte du connecteur signal, puisqu'il ne recevra plus les paramètres.

Quelque soit le régime du GEP, une action sur le volant provoque une augmentation de la pression dans le circuit hydraulique. Cette pression engendre une augmentation du couple résistif de la pompe associée au moteur électrique du GEP. Cette augmentation de couple se traduit par une augmentation de la puissance électrique consommée. Comme la tension du réseau est quasi constante, une sollicitation volant va se traduire par une augmentation du courant consommé par le GEP.

La troisième période peut être précédée par un temps de latence, pendant lequel le moteur peut être commandé en diminuant progressivement le régime.

De préférence, le procédé peut comprendre une étape supplémentaire, postérieure à l'étape consistant à commander le moteur pendant la troisième période. Cette étape rajoutée peut consister à commander le moteur, pendant une quatrième période, en diminuant progressivement le régime, dès que le courant surveillé consommé par le moteur est inférieur ou égal à une deuxième valeur prédéterminée. La quatrième période peut être précédée par un temps de latence, pendant lequel le moteur est commandé au régime consigne donné à partir de valeurs prédéterminées respectives pour les paramètres vitesse véhicule et vitesse volant.

Le régime du moteur électrique peut être diminué progressivement jusqu'à atteindre une valeur sensiblement nulle. L'étape consistant à commander le moteur pendant la première période peut être accompagnée par une étape pouvant consister à générer un message d'alerte à l'attention de l'utilisateur.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente un schéma en éclaté d'une structure générale d'un système d'assistance de direction électro-hydraulique d'un véhicule automobile ; et
- la Figure 2 représente trois courbes, correspondant, respectivement du haut vers le bas, au pilotage d'un GEP, au signal courant consommé et à l'impulsion d'activité à destination du GEP, selon l'invention.

### EXPOSÉ DÉTAILLÉ DE MODES DE RÉALISATION PRÉFÉRÉS

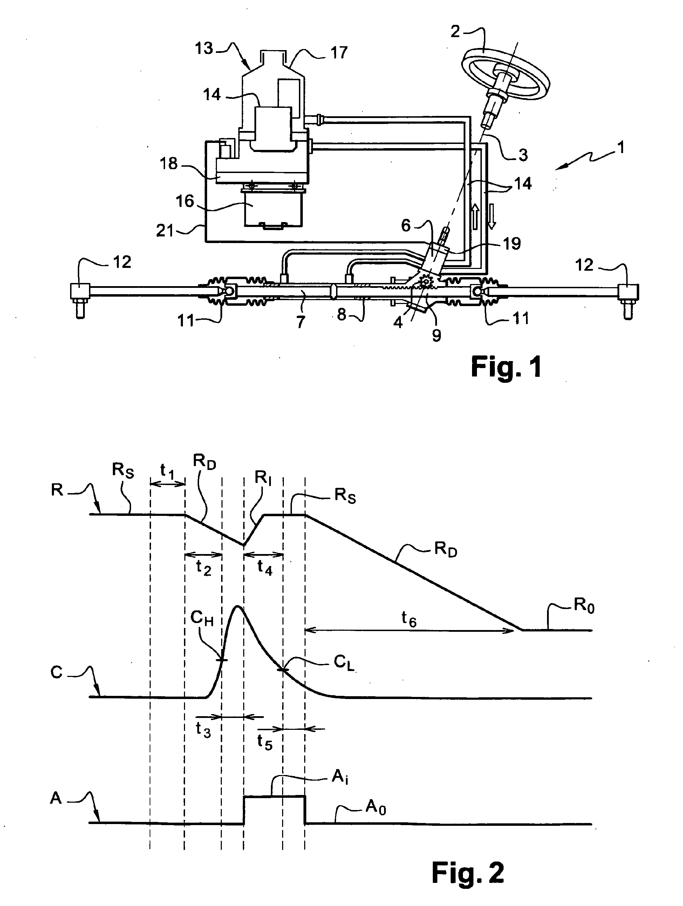

Comme l'illustre la Figure 1, un équipement ou système électro-hydraulique de direction assistée 1 comprend un volant de direction 2 et un arbre de commande de direction 3 (représenté par son axe longitudinal), permettant à l'utilisateur de déterminer l'orientation des roues directrices de son véhicule. L'arbre de direction 3 est en prise avec un pignon rotatif 4, par l'intermédiaire d'une valve d'assistance 6. La valve d'assistance 6 est liée à une crémaillère 7 montée coulissante dans un carter central tubulaire 8.

Un vérin hydraulique 9 comprenant un piston solidaire de la crémaillère 7 est intégré dans le carter tubulaire 8. Les extrémités gauche et droite de la crémaillère 7 sont recouvertes et protégées par des soufflets 11. Les soufflets sont montés aux extrémités du carter 8, sont accouplées à des biellettes 12 qui commandent l'orientation des roues directrices gauche et droite du véhicule.

La valve d'assistance 6 est hydrauliquement connectée à un GEP 13, via des canalisations 14. La valve d'assistance 6 envoie sélectivement du fluide hydraulique, vers l'une ou l'autre des deux chambres du vérin 9, selon que le conducteur du véhicule commande, à l'aide du volant 2, un braquage à gauche ou un braquage à droite. Le vérin 9 est alors actionné par la pression hydraulique délivrée et il réduit une force de direction. Le vérin 9 est ainsi régulé par le GEP 13.

Le GEP 13 comprend une pompe hydraulique 14 qui délivre une pression hydraulique au vérin 9, un moteur d'entraînement 16 de la pompe 14 et un réservoir de fluide hydraulique 17. Un calculateur 18 ou module connu sous l'abréviation ECU, c'est-à-dire « Electronic Control Unit», a pour fonction de piloter le moteur 16, de manière à ce que la pompe 14 génère une pression hydraulique appropriée. Il est à noter que le GEP 13 ne possède pas de capteur interne donnant directement l'utilisation de la direction comme un capteur de couple volant ou un capteur angle volant à partir du fluide hydraulique en retour de la valve d'assistance 6.

Le calculateur 18 reçoit un signal électrique lié au paramètre d'information vitesse véhicule par un capteur de vitesse (non représenté) prévu sur le véhicule. En outre, un capteur d'angle 19, monté au niveau de la valve d'assistance 6, ramène vers le calculateur 18 du GEP 13, grâce à la ligne 21, les informations liées au volant 2, c'est-à-dire un signal électrique lié au paramètre de vitesse volant et angle volant. Le calculateur 18 reçoit aussi les informations avec signal électrique pour les paramètres APC et état moteur thermique. Le calculateur 18 présente des moyens pour détecter un courant consommé par le moteur 16, en cas de mouvement détecté sur le volant 2 et transmis via la valve d'assistance 6 et la pompe 14.

Le calculateur 18 calcule la valeur cible de la vitesse de rotation du moteur 16 sur la base du signal de vitesse véhicule, de vitesse volant, d'angle volant, d'APC et d'état moteur thermique.

Selon le procédé de l'invention, un exemple de stratégie de pilotage du GEP 13 se met en place, en cas de déconnection d'un connecteur signal transmettant les signaux liés aux paramètres vitesse véhicule, vitesse volant, angle volant, APC et état moteur thermique. Les étapes du procédé sont composées de temporisations et de seuils.

Comme cela est visible en Figure 2, la courbe du haut représente le facteur de correction du GEP, correspondant au régime R imposé au moteur 16, en fonction du temps. La courbe médiane représente le courant C consommé par le moteur 16, en fonction du temps. La courbe du bas représente l'activité d'assistance ou « assistance activity » A à destination du GEP 13, en fonction du temps.

Dans un premier temps, le calculateur 18 pilote le GEP 13 en commandant le moteur 16 à un régime consigne choisi R₁, en prenant une vitesse véhicule par défaut et une vitesse volant par défaut. Le régime consigne ou forfaitaire standard choisi R_{S} est maintenu pendant un temps de confirmation de perte de connecteur signal, c'est-à-dire une première période t₁. Ceci peut être accompagné d'un allumage voyant pour prévenir l'utilisateur de ce mode et la panne de son système de direction assistée 1.

Puis, le régime est progressivement et très lentement diminué R_{D}, tout en surveillant le courant consommé C pendant un temps donné, c'est-à-dire une deuxième période t₂. Si le courant consommé C dépasse un premier seuil haut C_{H}, pendant une première fenêtre de temps donnée, c'est-à-dire un premier temps de latence t₃, la variable d'activité d'assistance passe à 1 sous la forme d'une impulsion Aᵢ. Le régime GEP est alors réinitialisé et remonté R_{I} à son régime forfaitaire R_{S}, pendant un temps donné ou quatrième période t₄, tant que le courant ne passe pas en dessous d'un deuxième seuil bas C_{L}.

Lorsque le seuil bas C_{L} est franchi, le régime forfaitaire R_{S} est maintenu pendant une deuxième fenêtre de temps donnée, c'est-à-dire un deuxième temps de latence t₅. Passé ce deuxième temps de latence t₅, la variable d'activité d'assistance repasse à 0 A₀ et le régime descend progressivement R_{D} à une valeur nulle R₀, en un temps donné ou quatrième période t₆, jusqu'à l'arrêt du GEP 13, si le courant consommé C ne refranchit pas à nouveau le seuil haut C_{H}.

Le signal courant C mesuré en interne du GEP 13 reflète l'utilisation de ce même GEP 13. Les seuils C_{H} et C_{L} et les temporisations t₁, t₃ et t₅ doivent être bien choisis de manière à identifier toute sorte de roulage, la parfaite ligne droite sur autoroute, toutes les manoeuvres parking, etc.

Les avantages du procédé de pilotage du GEP 13 sont les suivants. Il permet d'éviter les arrêts de direction assistée 1 pendant un roulage. Il permet d'éviter les décharges batterie. Il permet de couper l'assistance progressivement, en cas de non utilisation. Il rend disponibles les prestations pour les différents types de roulages (autoroutes et parking). Il améliore la qualité perçue en maintenant la continuité de la direction assistée et de ses avantages indéniables.

La présente invention n'est pas limitée aux modes de réalisation décrits et illustrés. De nombreuses modifications peuvent être réalisées, qu'elles restent dans le cadre défini par la portée du jeu de revendications.

La variation de courant consommé ou les dérivées du courant consommé peuvent être également utilisées. Le procédé selon l'invention pourra également s'appliquer, en cas de disfonctionnement partiel du calculateur.

## Revendications

1. Procédé pour piloter un groupe électropompe, destiné à un système d'assistance de direction électro-hydraulique (1) d'un véhicule automobile, comprenant notamment une pompe hydraulique d'assistance (14), entraînée en rotation par un moteur électrique (16), sous la commande d'un calculateur (18) alimenté par un connecteur de puissance et un connecteur signal transmettant les signaux liés aux paramètres vitesse véhicule, vitesse volant, angle volant, après contact, état moteur thermique, **caractérisé en ce qu'**en cas de déconnection du connecteur de signal, il comprend les étapes suivantes consistant :
- à commander le moteur (16), pendant une première période (t₁), à un régime prédéterminé donné (R_{S}), à partir de valeurs prédéterminées respectives pour les paramètres vitesse véhicule et vitesse volant,
- à commander le moteur (16), pendant une deuxième période (t₂), en diminuant progressivement le régime (R_{D}), et
- à surveiller, simultanément pendant la deuxième période (t2), un courant consommé (C) par ledit moteur (16)
- à commander le moteur (16), pendant une troisième période (t4), au régime consigne donné (R_{S}) à partir de valeurs prédéterminées des paramètres vitesse véhicule et vitesse volant, dès que le courant surveillé consommé (C) par le moteur est supérieur ou égal à une première valeur prédéterminée (C_{H}).

2. Procédé selon la revendication 1, **caractérisé en ce que** la troisième période (t₄) est précédée par un temps de latence (t₃), pendant lequel le moteur (16) est commandé en diminuant progressivement le régime (R_{D}).

3. Procédé selon la revendication 1 ou 2, **caractérisé en ce qu'**il comprend une étape supplémentaire consistant à commander le moteur (16), postérieure à l'étape consistant à commander le moteur (16), pendant la troisième période (t₄), pendant une quatrième période (t₆), en diminuant progressivement le régime (R_{D}), dès que le courant surveillé consommé (C) par le moteur (16) est inférieur ou égal à une deuxième valeur prédéterminée (C_{L}).

4. Procédé selon la revendication 3, **caractérisé en ce que** la quatrième période (t₆) est précédée par un temps de latence (t₅), pendant lequel le moteur (16) est commandé au régime consigne donné (R_{S}) à partir de valeurs prédéterminées respectives pour les paramètres vitesse véhicule et vitesse volant.

5. Procédé selon la revendication 3 ou 4, **caractérisé en ce que** le régime est diminué progressivement (R_{D}) jusqu'à atteindre une valeur sensiblement nulle (R₀).

6. Procédé selon l'une quelconque des revendications précédentes, **caractérisé en ce que** l'étape consistant à commander le moteur (16) pendant la première période (t₁) est accompagnée par une étape consistant à générer un message d'alerte à l'attention de l'utilisateur.

## Claims

1. Method for driving an electric pump unit, intended for a motor vehicle electro-hydraulic power steering system (1), comprising in particular a power steering hydraulic pump (14) rotationally driven by an electric motor (16) under the control of a computer (18) powered by a power connector and a signal connector transmitting the signals linked to the vehicle speed, steering wheel rate of turn, steering wheel angle, after contact and combustion engine condition parameters, **characterized in that**, in the event of the signal connector becoming disconnected it comprises the following steps which consist in:
- operating the motor (16), for a first period (t₁), at a predetermined given speed (R_{S}), on the basis of respective predetermined values for the vehicle speed and steering wheel rate of turn parameters,
- operating the motor (16), during a second period (t₂), while progressively decreasing the speed (R_{D}),
- at the same time during the second period (t₂), monitoring a current (C) drawn by said motor (16), and
- operating the motor (16), during a third period (t₄), at the given set speed (R_{S}) on the basis of predetermined values of the vehicle speed and steering wheel rate of turn parameters as soon as the monitored current (C) drawn by the motor becomes greater than or equal to a predetermined first value (C_{H}).

2. The method according to Claim 1, **characterized in that** the third period (t₄) is preceded by a latency time (t₃) during which the motor (16) is operated while gradually decreasing the speed (R_{D}).

3. The method according to Claim 1 or 2, **characterized in that** it comprises an additional step consisting in operating the motor (16), after the step consisting in operating the motor (16) during the third period (t₄), during a fourth period (t₆) while gradually decreasing the speed (R_{D}) as soon as the monitored current (C) drawn by the motor (16) becomes less than or equal to a second predetermined value (C_{L}).

4. The method according to Claim 3, **characterized in that** the fourth period (t₆) is preceded by a latency time (t₅) during which the motor (16) is operated at the given set speed (R_{S}) on the basis of respective predetermined values for the vehicle speed and steering wheel rate of turn parameters.

5. The method according to Claim 3 or 4, **characterized in that** the speed (R_{D}) is decreased gradually until it reaches a substantially zero value (R₀).

6. The method according to any one of the preceding claims, **characterized in that** the step consisting in operating the motor (16) during the first period (t₁) is accompanied by a step consisting in generating a warning message intended for the user.

## Patentansprüche

1. Verfahren zum Steuern einer für ein elektrohydraulisches Servolenkungssystem (1) eines Kraftfahrzeugs bestimmten Elektropumpeneinheit, die insbesondere eine hydraulische Lenkhilfepumpe (14) enthält, welche von einem Elektromotor (16) unter der Steuerung eines Rechners (18) in Drehung versetzt wird, der von einem Leistungsverbinder und einem Signalverbinder gespeist wird, der die mit den Parametern Fahrzeuggeschwindigkeit, Lenkradgeschwindigkeit, Lenkradwinkel, geschaltetes Plus, Zustand Verbrennungsmotor verbundenen Signale überträgt, **dadurch gekennzeichnet, dass** es im Fall eines Abschaltens des Signalverbinders die folgenden Schritte enthält, die darin bestehen:
- den Motor (16) während einer ersten Periode (t₁) mit einer gegebenen Vorbestimmten Drehzahl (R_{S}) ausgehend von Vorbestimmten Werten für die Parameter Fahrzeuggeschwindigkeit bzw. Lenkradgeschwindigkeit zu steuern,
- den Motor (16) während einer zweien Periode (t₂) zu steuern, indem die Drehzahl (R_{D}) progressiv verringert wird, und
- gleichzeitig während der zweiten Periode (t₂) einen vom Motor (16) verbrauchten Strom (C) zu überwachen,
- den Motor (16) während einer dritten Periode (t₄) mit der gegebenen Solldrehzahl (R_{S}) ausgehend von Vorbestimmten Werten der Parameter Fahrzeuggeschwindigkeit und Lenkradgeschwindigkeit zu steuern, sobald der vom Motor verbrauchte überwachte Strom (C) höher als ein oder gleich einem ersten Vorbestimmten Wert (C_{H}) ist.

2. Verfahren nach Anspruch 1, **dadurch gekennzeichnet, dass** vor der dritten Periode (t₄) eine Latenzzeit (t₃) liegt, während der der Motor (16) gesteuert wird, indem die Drehzahl (R_{D}) progressiv verringert wird.

3. Verfahren nach Anspruch 1 oder 2, **dadurch gekennzeichnet, dass** es einen zusätzlichen Schritt enthält, der darin besteht, den Motor (16) nach dem Schritt, der darin besteht, den Motor (16) während der dritten Periode (t₄) zu steuern, während einer vierten Periode (t₆) zu steuern, indem die Drehzahl (R_{D}) progressiv verringert wird, sobald der vom Motor (16) verbrauchte überwachte Strom (C) geringer als ein oder gleich einem zweien Vorbestimmten Wert (C_{L}) ist.

4. Verfahren nach Anspruch 3, **dadurch gekennzeichnet, dass** vor der vierten Periode (t₆) eine Latenzzeit (t₅) liegt, während der der Motor (16) ausgehend von vorbestimmten Werten für die Parameter Fahrzeuggeschwindigkeit bzw. Lenkradgeschwindigkeit mit der gegebenen Solldrehzahl (R_{S}) gesteuert wird.

5. Verfahren nach Anspruch 3 oder 4, **dadurch gekennzeichnet, dass** die Drehzahl (R_{D}) progressiv verringert wird, bis ein Wert im Wesentlichen gleich Null (R₀) erreicht wird.

6. Verfahren nach einem der vorhergehenden Ansprüche, **dadurch gekennzeichnet, dass** der Schritt, der darin besteht, den Motor (16) während der ersten Periode (t₁) zu steuern, von einem Schritt begleitet wird, der darin besteht, eine Warnmeldung an den Benutzer zu erzeugen.
